# EUROPÄISCHE PATENTSCHRIFT

(11) **EP 3 110 279 B1**
(45) Veröffentlichungstag und Bekanntmachung des Hinweises auf die Patenterteilung: **11.04.2018**
(21) Anmeldenummer: 15707323.0
(22) Anmeldetag: 25.02.2015
(51) Int. Cl.: B60R 22/18, A44B 11/25

(54) **GURTSCHLOSS MIT EINER BEFESTIGUNGSVORRICHTUNG FÜR EIN SEIL**
BELT BUCKLE HAVING A FASTENING DEVICE FOR A CABLE
SERRURE DE CEINTURE COMPORTANT UN DISPOSITIF DE FIXATION DE CÂBLE

(30) Priorität: 27.02.2014 DE 102014102568
(43) Veröffentlichungstag der Anmeldung: 04.01.2017
(73) Patentinhaber: Autoliv Development AB, 447 83 Vårgårda (SE)
(72) Erfinder: LEGDE, Dietmar, 22457 Hamburg (DE); SCHARNBERG, Ole, 22417 Hamburg (DE); HERMANN, Michel, 19288 Ludwigslust (DE)
(74) Vertreter: Becker, Thomas
(86) Internationale Anmeldenummer: PCT/EP2015/053885
(87) Internationale Veröffentlichungsnummer: WO 2015/128345

(56) Entgegenhaltungen:
- US-A- 4 454 634
- US-B1- 6 336 261

## Beschreibung

Die vorliegende Erfindung betrifft ein Gurtschloss für ein Sicherheitsgurtsystem mit einem federbelasteten Riegelmechanismus zur Verriegelung einer in ein Schlossgehäuse eingeschobenen Gurtzunge und mit einer an dem Schlossgehäuse unter Federwirkung verschiebbar geführten Drucktaste zum für das Entriegeln des Gurtschlosses erforderlichen Beaufschlagen des Riegelmechanismus, wobei ein das Gurtschloss an einem Fahrzeug befestigendes Seil mittels einer an das Schlossgehäuse genieteten Befestigungsvorrichtung befestigt ist und die Befestigungsvorrichtung einen plattenförmigen Grundkörper umfasst, von dessen Grundfläche in einer axialen Richtung ein Anlagevorsprung mit einer radialen bogenförmigen Anlagefläche für eine von dem Seil gebildeten Schlaufe hervorsteht und wobei von dem Anlagevorsprung ein Vernietungsstift in der axialen Richtung hervorsteht.

Aus der US 4,454,634 ist beispielsweise ein Gurtschloss bekannt, welches einen Riegelmechanismus aufweist, der in nicht eingeschobenem Zustand der Gurtzunge in Öffnungsrichtung und bei eingeschobener Gurtzunge in Schließrichtung federbelastet ist. In der Verriegelungsstellung des Verriegelungsmechanismus wird ein Riegel durch einen Sicherungsstift in Eingriff mit der Gurtzunge gehalten. Der Sicherungsstift wiederum ist in einer L-förmigen Kulissenführung in einem Schlossgehäuse geführt und von einer einer an dem Schließgehäuse geführten Betätigungstaste bewegbar.

Das Gurtschloss ist mittels eines Seiles an einem Fahrzeug befestigt. Das Seil ist in dem Gurtschloss als Schlaufe geführt. Die Schlaufe liegt an einer Anlagefläche eines Anlagevorsprunges einer Befestigungsvorrichtung an. Die Befestigungsvorrichtung umfasst einen plattenförmigen Grundkörper, von dem der Anlagevorsprung in einer axialen Richtung hervorsteht, von dem wiederum ein Vernietungsstift hervorsteht. Die Befestigungsvorrichtung ist mittels des das Schlossgehäuse durchgreifenden Vernietungsstiftes an dem Schlossgehäuse befestigt.
Es gibt nun Bestrebungen, die Abmessungen eines Gurtschlosses in der Verschieberichtung der Drucktaste zu verringern, ohne die Anforderungen an die Stabilität und Sicherheit des Gurtschlosses zu vernachlässigen.
Ausgehend hiervon ist es Aufgabe der vorliegenden Erfindung, die mit Bezug zum Stand der Technik geschilderten Probleme zumindest teilweise zu lösen und insbesondere ein Gurtschloss anzugeben, dessen Abmessungen in Richtung der Verschieberichtung der Drucktaste geringer sind.
Gelöst werden diese Aufgaben mit einem Gurtschloss mit den Merkmalen des unabhängigen Anspruches. Vorteilhafte Ausgestaltungen des Gurtschlosses sind in den abhängigen Ansprüchen und in der Beschreibung angegeben. Die Aufgaben werden insbesondere dadurch gelöst, dass der Vernietungsstift exzentrisch zu einem Scheitel der von dem Seil umschlungenen bogenförmigen Anlagefläche des Anlagevorsprungs versetzt ist, wobei der Abstand des Scheitels der Anlagefläche zu dem Mittelpunkt des Vernietungsstiftes kleiner ist als der Krümmungsradius der Anlagefläche an dem Scheitel.
Der Riegelmechanismus umfasst insbesondere eine oder mehrere Federn, einen die Gurtzunge in der Verriegelungsstellung festlegenden, an dem Schlossgehäuse schwenkbar gelagerten Riegel, einen den Riegel in der Verriegelungsstellung sichernden Sicherungsstift, sowie einen federbelasteten Hebel, der mit dem Sicherungsstift zusammenwirkt. Ferner ist ein mit der Gurtzunge zusammenwirkender Auswerfer vorgesehen. Der Hebel ist insbesondere so an dem von der Schlosszunge betätigten Auswerfer schwenkbar gelagert, dass die an dem Hebel angreifende Feder den Hebel bei einem Ent- bzw. Verriegelungsvorgang aus einer Neutralstellung entweder in die Verriegelungsstellung oder Entriegelungsstellung belasten kann. Der Hebel ist dabei so angeordnet, dass er den Sicherungsstift in der Verriegelungsstellung so hält, dass der Sicherungsstift den Riegel in der Verriegelungsstellung festlegt. Bezüglich der genaueren Funktion des Riegelmechanismus sei auf US 4,454,634 verwiesen, auf die hier vollumfänglich in Bezug auf die Funktion der Bestandteile des Riegelmechanismus Bezug genommen wird. Ferner ist in diesem Zusammenhang die DE 10 2008 022 675 B3 der Anmelderin zu nennen. Der plattenförmige Grundkörper der Befestigungsvorrichtung erstreckt sich insbesondere in eine Längsrichtung, in eine zu der Längsrichtung orthogonale Breitenrichtung und in eine axiale Richtung, die orthogonal zu der Längsrichtung und Breitenrichtung ist, wobei der plattenförmige Grundkörper insbesondere eine kleinere Abmessung in der axialen Richtung aufweist als in Längs- und Breitenrichtung. Von der in Längsrichtung und Breitenrichtung aufgespannten Grundfläche des Grundkörpers steht nun in der axialen Richtung ein Anlagevorsprung hervor. Radial zu der axialen Richtung weist der Anlagevorsprung eine Anlagefläche auf, an die eine Innenseite einer von dem Seil gebildeten Schlaufe anliegt, wobei das Seil in axialer Richtung an der Grundfläche anliegen kann. Dabei wird die Stelle der Anlagefläche, an der die Mitte des an der Anlagefläche anliegenden Seilabschnittes anliegt, als Scheitel verstanden. Von dem Anlagevorsprung wiederum steht ein Vernietungsstift in der axialen Richtung hervor, der an das Schlossgehäuse genietet ist. Der Vernietungsstift hat insbesondere einen kreisrunden Querschnitt, wobei der Radius dieses Querschnittes kleiner ist als der Radius eines Querschnitts des Anlagevorsprunges. Als Querschnitt wird hier und im Folgenden ein Schnitt quer zur axialen Richtung verstanden.

Gemäß der vorliegenden Erfindung ist der Vernietungsstift hin zu der von dem Seil umschlungenen Anlagefläche, insbesondere hin zu dem Scheitel, radial versetzt. In einem Extremfall könnte eine radiale Umfangsfläche des Vernietungsstiftes mit der Anlagefläche fluchten. Der Mittelpunkt des Vernietungsstiftes ist der Mittelpunkt insbesondere des kreisrunden Querschnittes des Vernietungsstiftes. Mit dem Krümmungsradius der Anlagefläche an dem Scheitel ist gemeint, dass der Krümmungsradius der Anlagefläche an der Stelle bestimmt wird, an dem die Mitte des an der Anlagefläche anliegenden Seilabschnittes anliegt. Eine solche Dimensionierung des Abstands bedingt insbesondere, dass der Vernietungsstift hin zu der Anlagefläche versetzt ist.

Durch diesen exzentrischen Versatz des Vernietungsstiftes zu der Anlagefläche wird nun erreicht, dass bei gleicher Vernietungsstelle an dem Schlossgehäuse das Seil hin zu dem der Drucktaste entgegengesetzten Ende des Gurtschlosses versetzt ist, so dass ausgehend von dem Vernietungsstift in Richtung der Drucktaste mehr Platz für die übrigen Komponenten des Gurtschlosses gegeben ist oder dass in dieser Richtung das Gurtschloss verkürzt ausgeführt werden kann.

Gemäß einer vorteilhaften Ausgestaltung des Gurtschlosses, beschreibt die Anlagefläche des Anlagevorsprunges einen Kreisbogen. Ein Querschnitt des Anlagevorsprunges quer zu der axialen Richtung ist also im Bereich des anliegenden Seiles ein Kreisbogen. In diesem Falle läge die Schlaufe des Seiles im Wesentlichen in einem Halbkreis an der Anlagefläche an, wobei in diesem Halbkreis das Seil überall den gleichen Krümmungsradius aufweist.

Alternativ kann vorgesehen sein, dass die Anlagefläche einen Bogen einer Ellipse beschreibt. In diesem Falle würde sich die Krümmung der Anlagefläche entlang der Schlaufe ändern. Der Scheitel der Seilschlaufe würde also insbesondere an dem Scheitel des Ellipsenbogens anliegen. Der für die Bemessung des Abstandes relevante Krümmungsradius wäre dann also der Krümmungsradius der Ellipse am Scheitel. Bei einer solchen Ausgestaltung wäre der Krümmungsradius der Anlagefläche am Scheitel größer als an den übrigen Stellen der Anlagefläche.

Gemäß einer weiteren Ausgestaltung des Gurtschlosses ist vorgesehen, dass mindestens eine Seilhalterung an der Befestigungsvorrichtung ausgebildet ist, die mit einer mindestens dem Seildurchmesser entsprechenden Entfernung zu der Anlagefläche, dieser gegenüberliegend, angeordnet ist. Die Seilhalterung steht insbesondere in axialer Richtung von dem Grundkörper ab. Die Seilhalterung erlaubt es, dass die Schlaufe des Seiles zwischen der Seilhalterung und der Anlagefläche eingelegt werden kann, so dass die Schlaufe zwischen Seilhalterung und Anlagefläche fixiert ist. Dies hat bei einer Montage des Gurtschlosses den Vorteil, dass die Befestigungsvorrichtung mit der vormontierten Schlaufe des Seiles in das Gurtschloss eingeführt werden kann.

Damit die Befestigungsvorrichtung ein relativ kleines Gewicht hat, ist vorgesehen, dass der Grundkörper eine rechteckige Grundform hat und eine Längsseite des Grundkörpers mit einem Bereich der Anlagefläche, insbesondere mit dem Scheitel, des Anlagevorsprungs fluchtet. Das bedeutet insbesondere, dass der Grundkörper nicht zu allen Seiten über den Anlagevorsprung hervorsteht.

Gemäß einer weiteren Ausführungsform ist die Befestigungsvorrichtung einteilig ausgebildet, so dass eine einfache und kostengünstige Herstellung der Befestigungsvorrichtung möglich ist.

Ferner ist vorgesehen, dass zur Vermeidung von Montagefehlern eine Ausnehmung in dem Grundkörper ausgebildet ist. Entsprechend zu der Ausnehmung ist in dem Gurtschloss ein Vorsprung ausgebildet, an dem die Ausnehmung zur Anlage kommt, wenn die Befestigungsvorrichtung bei der Montage richtig ausgerichtet ist, wobei bei falscher Ausrichtung der Befestigungsvorrichtung ein anderer Bereich der Befestigungsvorrichtung an dem Vorsprung zur Anlage käme, wodurch die falsche Ausrichtung merkbar angezeigt wird.

Die Erfindung sowie das technische Umfeld werden im Folgenden anhand der Figuren erläutert, wobei darauf hinzuweisen ist, dass die Figuren vorteilhafte Ausgestaltungen der Erfindung zeigen, diese jedoch nicht darauf beschränkt ist. Die Figuren zeigen schematisch
- Fig. 1:: ein Gurtschloss aus dem Stand der Technik mit einer Befestigungsvorrichtung,
- Fig. 2:: eine erste Ausführungsform einer Befestigungsvorrichtung an einem Seil,
- Fig. 3:: die Befestigungsvorrichtung aus Fig. 2 in einer perspektivischen Ansicht,
- Fig. 4:: eine Aufsicht auf eine zweite Ausführungsform einer Befestigungsvorrichtung,
- Fig. 5:: eine dritte Ausführungsform der Befestigungsvorrichtung,
- Fig. 6:: eine vierte Ausführungsform der Befestigungsvorrichtung und
- Fig. 7:: eine fünfte Ausführungsform einer Befestigungsvorrichtung.

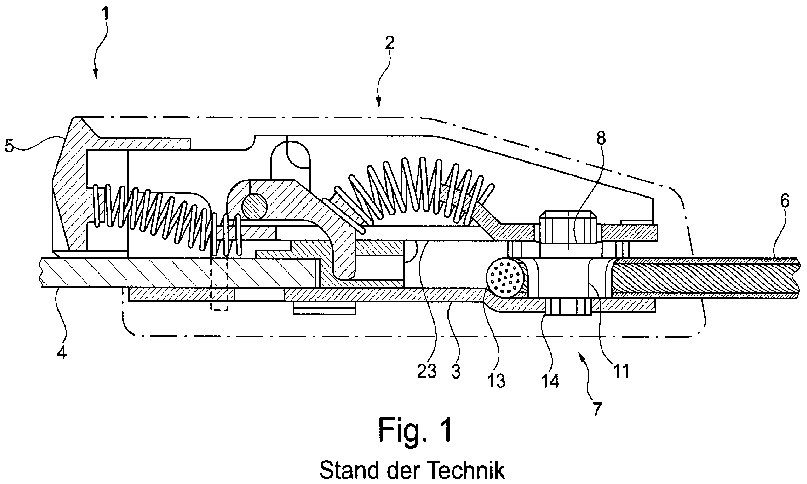

Fig. 1 zeigt ein Gurtschloss 1 aus dem Stand der Technik mit einem Schlossgehäuse 3, in dem ein einen Riegel 23 umfassender Riegelmechanismus 2 angeordnet ist. In einer Schließstellung des Gurtschlosses 1 ist eine Gurtzunge 4 von dem Riegel 23 in dem Schlossgehäuse 3 festgelegt. Durch Betätigen einer Drucktaste 5, die verschiebbar zu dem Schlossgehäuse 3 angebracht ist, wird der Riegelmechanismus 2 betätigt, so dass die Gurtzunge 4 gelöst wird. Die genaue Funktion des Riegelmechanismus 2 ist im Stand der Technik ausführlich beschrieben und für die vorliegende Erfindung unerheblich.

Das Gurtschloss 1 ist mittels eines Seiles 6 an einem Fahrzeug befestigt. Das Seil 6 ist in dem Schlossgehäuse 3 als Schlaufe 13 geführt und mittels einer Befestigungsvorrichtung 7 über einen Vernietungsstift 14 der Befestigungsvorrichtung 7 an das Schlossgehäuse 3 genietet. Die Befestigungsvorrichtung 7 sowie das damit zusammenwirkende Seil 6 sind in den folgenden Ausführungsbeispielen genauer beschrieben.

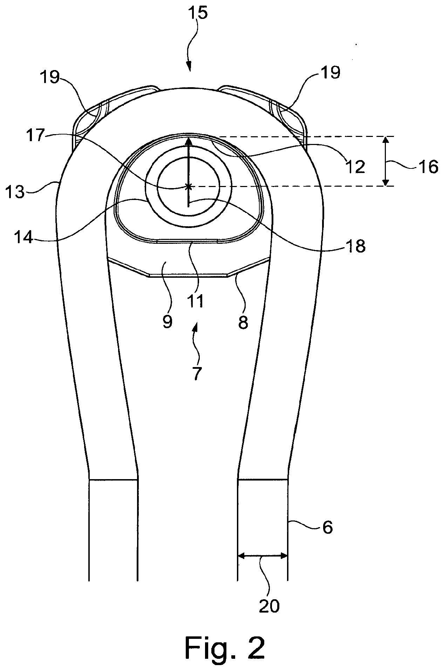

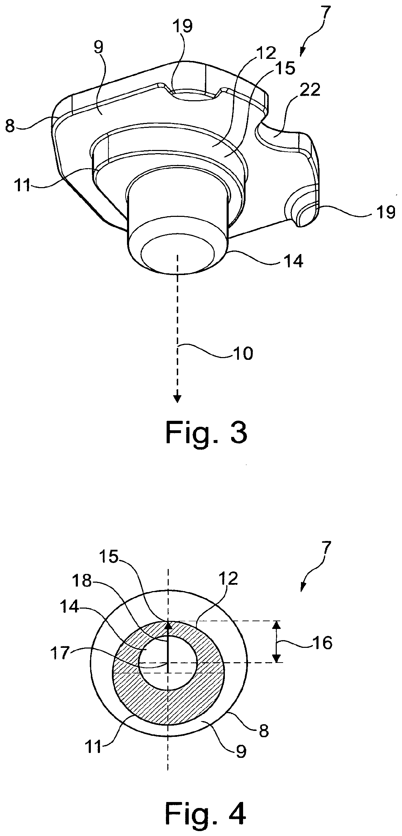

Eine erste Ausführungsform einer Befestigungsvorrichtung 7 ist in den Figuren 2 und 3 dargestellt, wobei in Figur 2 ferner ein einen Seildurchmesser 20 aufweisendes Seil 6 dargestellt ist. Die Befestigungsvorrichtung 7 umfasst einen Grundkörper 8, von dessen Grundfläche 9 ein Anlagevorsprung 11 in einer axialen Richtung 10 hervorsteht. Der Anlagevorsprung 11 weist an seinem Umfang eine radiale, bogenförmige Anlagefläche 12 auf, an der eine Innenseite einer von dem Seil 6 gebildeten Schlaufe 13 anliegt. Von dem Anlagevorsprung 11 steht wiederum in der axialen Richtung 10 ein Vernietungsstift 14 hervor, mittels welchem die Befestigungsvorrichtung 7 an das Schlossgehäuse 3 genietet wird. Gemäß der vorliegenden Erfindung ist nun der Vernietungsstift 14 mit einem Mittelpunkt 17 exzentrisch hin zu einem Scheitel 15 der Anlagefläche 12 versetzt. Der Scheitel 15 ist dabei als die Stelle definiert, an die die Mitte des an der Anlagefläche 12 anliegenden Seilabschnittes anliegt. Der Abstand 16 des Mittelpunktes 17 des Vernietungsstiftes 14 zum Scheitel 15 ist also geringer als ein Krümmungsradius 18 der Anlagefläche 12 an dem Scheitel 15. Da in dieser Ausführungsform die Anlagefläche 12 einen kreisbogenförmigen Querschnitt aufweist, entspricht der Krümmungsradius 18 an dem Scheitel 15 dem Radius des Kreisbogens.

Ferner sind zwei Seilhalterungen 19 an dem Grundkörper 8 ausgebildet, die sich in axialer Richtung 10 erstrecken. Die Seilhalterungen 19 haben eine solche Entfernung zu der Anlagefläche 12, dass das Seil 6 zwischen Anlagefläche 12 und Seilhalterungen 19 fixiert ist. Zudem ist eine Ausnehmung 22 in dem Grundkörper 8 ausgebildet, die Montagefehler verhindert.

In Figur 4 ist eine zweite Ausführungsform einer Befestigungsvorrichtung 7 beschrieben, wobei hier insbesondere auf die Unterschiede zu der ersten Ausführungsform eingegangen wird. Die Befestigungsvorrichtung 7 weist einen Grundkörper 8 mit einer kreisrunden Querschnittsfläche auf. Von einer Grundfläche 9 des Grundkörpers 8 steht ein ebenfalls eine kreisrunde Querschnittsfläche aufweisender Anlagevorsprung 11 ab. Von dem Anlagevorsprung 11 steht wiederum ein Vernietungsstift 14 hervor. Es ist zu erkennen, dass der Vernietungsstift 14 mit seinem Mittelpunkt 17 radial versetzt zu dem Mittelpunkt der kreisrunden Querschnittsfläche des Anlagevorsprungs 11 ist. Der Abstand 16 zwischen dem Mittelpunkt 17 des Vernietungsstiftes 14 und dem Scheitel 15 der Anlagefläche 12 ist also geringer als der Krümmungsradius 18 der Anlagefläche 12 am Scheitel 15.

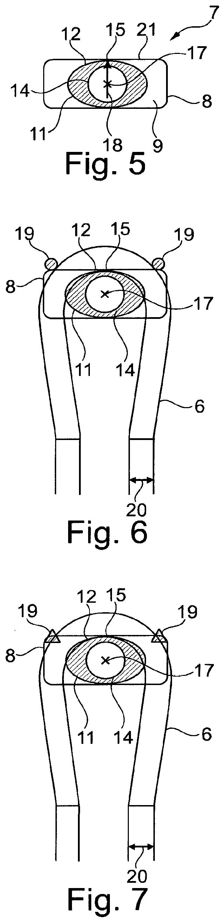

In Figur 5 ist ein drittes Ausführungsbeispiel einer Befestigungsvorrichtung 7 dargestellt. Die Befestigungsvorrichtung 7 umfasst einen rechteckigen plattenförmigen Grundkörper 8, von dessen Grundfläche 9 ein Anlagevorsprung 11 mit einer im Querschnitt ellipsenförmigen Form hervorsteht. Der Anlagevorsprung 11 weist eine Anlagefläche 12 auf. Die Anlagefläche 12 fluchtet am Scheitel 15 mit einer Längsseite 21 des rechteckigen Grundkörpers 8. Von dem Anlagevorsprung 11 steht ein Vernietungsstift 14 hervor, dessen Mittelpunkt 17 axial versetzt zu dem Scheitel 15 der Anlagefläche 12 des Anlagevorsprunges 11 ist. Der Krümmungsradius 18 der Anlagefläche 12 in dem Scheitel 15 ist größer als der Abstand des Mittelpunktes 17 des Vernietungsstiftes 14 zu dem Scheitel 15 der Anlagefläche 12.

In den Figuren 6 und 7 sind zwei Ausführungsformen einer Befestigungsvorrichtung 7 dargestellt, wobei sich diese Ausführungsformen zu dem dritten Ausführungsbeispiel in Figur 5 in der Ausgestaltung von Seilhalterungen 19 unterscheiden. Die Seilhalterungen 19 sind mit einer solchen Entfernung zu den ellipsenförmigen Anlageflächen 12 der Anlagevorsprünge 11 angeordnet, dass die dargestellten Seile 6 mit den Seildurchmessern 20 zwischen den Seilhalterungen 19 und den Anlagenflächen 12 fixiert sind. Bei der Ausführungsform in Figur 6 weisen die Seilhalterungen 19 einen kreisrunden Querschnitt auf, während bei der Ausführungsform der Figur 7 die Seilhalterungen 19 einen dreieckigen Querschnitt aufweisen.

Aufgrund des radialen, exzentrischen Versatzes des Vernietungsstiftes 14 in Richtung des Scheitels 15 der Anlagefläche 12 können mit der vorliegenden Erfindung Gurtschlösser 1 mit einer geringeren Erstreckung in Verschieberichtung der Drucktaste gebaut werden.

### Bezugszeichenliste

- 1: Gurtschloss
- 2: Riegelmechanismus
- 3: Schlossgehäuse
- 4: Gurtzunge
- 5: Drucktaste
- 6: Seil
- 7: Befestigungsvorrichtung
- 8: Grundkörper
- 9: Grundfläche
- 10: axiale Richtung
- 11: Anlagevorsprungs
- 12: Anlagefläche
- 13: Schlaufe
- 14: Vernietungsstift
- 15: Scheitel
- 16: Abstand
- 17: Mittelpunkt
- 18: Krümmungsradius
- 19: Seilhalterung
- 20: Seildurchmesser
- 21: Längsseite
- 22: Ausnehmung
- 23: Riegel

## Patentansprüche

1. Gurtschloss (1) für ein Sicherheitsgurtsystem mit einem federbelasteten Riegelmechanismus (2) zur Verriegelung einer in ein Schlossgehäuse (3) eingeschobenen Gurtzunge (4) und mit einer an dem Schlossgehäuse (3) unter Federwirkung verschiebbar geführten Drucktaste (5) zum für das Entriegeln des Gurtschlosses (1) erforderlichen Beaufschlagen des Riegelmechanismus (2), wobei ein das Gurtschloss (1) an einem Fahrzeug befestigendes Seil (6) mittels einer an das Schlossgehäuse (3) genieteten Befestigungsvorrichtung (7) befestigt ist und die Befestigungsvorrichtung (7) einen plattenförmigen Grundkörper (8) umfasst, von dessen Grundfläche (9) in einer axialen Richtung (10) ein Anlagevorsprung (11) mit einer radialen bogenförmigen Anlagefläche (12) für eine von dem Seil (6) gebildete Schlaufe (13) hervorsteht und von dem Anlagevorsprung (11) ein Vernietungsstift (14) in der axialen Richtung (10) hervorsteht, **dadurch gekennzeichnet, dass** der Vernietungsstift (14) exzentrisch zu einem Scheitel (15) der von dem Seil (6) umschlungenen bogenförmigen Anlagefläche (12) des Anlagevorsprungs (11) versetzt ist, wobei der Abstand (16) des Scheitels (15) der Anlagefläche (12) zu dem Mittelpunkt (17) des Vernietungsstiftes (14) kleiner ist als der Krümmungsradius (18) der Anlagefläche (12) an dem Scheitel (15).

2. Gurtschloss (1) nach Anspruch 1, wobei die Anlagefläche (12) einen Kreisbogen beschreibt.

3. Gurtschloss (1) nach Anspruch 1, wobei die Anlagefläche (12) einen Bogen einer Ellipse beschreibt.

4. Gurtschloss (1) nach einem der vorhergehenden Ansprüche, wobei mindestens eine Seilhalterung (19) an der Befestigungsvorrichtung (7) ausgebildet ist, die mit einer mindestens dem Seildurchmesser (20) entsprechenden Entfernung zu der Anlagefläche (12), dieser gegenüberliegend angeordnet ist.

5. Gurtschloss (1) nach einem der vorhergehenden Ansprüche, wobei der Grundkörper (8) eine rechteckige Grundform hat und eine Längsseite (21) des Grundkörpers (8) mit einem Bereich der Anlagefläche (12) des Anlagevorsprungs (11) fluchtet.

6. Gurtschloss (1) nach einem der vorhergehenden Ansprüche, wobei die Befestigungsvorrichtung (7) einteilig ausgebildet ist.

7. Gurtschloss (1) nach einem der vorhergehenden Ansprüche, wobei in dem Grundkörper (8) eine Ausnehmung (22) zur Vermeidung von Montagefehlern ausgebildet ist.

## Claims

1. Belt buckle (1) for a safety belt system with a spring-loaded latch mechanism (2) for locking a belt tongue (4) inserted into a lock housing (3) and with a push button (5) guided displaceably on the lock housing (3) under spring action for acting on the latch mechanism (2) as required to unlock the belt buckle (1), wherein a cable (6) attaching the belt buckle (1) to a vehicle is attached by an attachment device (7) riveted to the lock housing (3) and the attachment device (7) comprises a plate-shaped basic body (8), from the base surface (9) of which an abutment projection (11) with a radial arcuate abutment surface (12) for a loop (13) formed by the cable (6) protrudes in an axial direction (10) and a rivet pin (14) protrudes in the axial direction (10) from the abutment projection (11), **characterised by** that the rivet pin (14) is offset eccentrically to an apex (15) of the arcuate abutment surface (12) of the abutment projection (11), which surface is encircled by the cable (6), wherein the distance (16) of the apex (15) of the abutment surface (12) to the centre point (17) of the rivet pin (14) is smaller than the radius of curvature (18) of the abutment surface (12) at the apex (15).

2. Belt buckle (1) according to claim 1, wherein the abutment surface (12) describes a circular arc.

3. Belt buckle (1) according to claim 1, wherein the abutment surface (12) describes an arc of an ellipse.

4. Belt buckle (1) according to any one of the preceding claims, wherein at least one cable holder (19) is formed on the attachment device (7), which holder is arranged at a distance at least corresponding to the cable diameter (20) from the abutment surface (12) and lying opposite this.

5. Belt buckle (1) according to any one of the preceding claims, wherein the basic body (8) has a rectangular shape and a longitudinal side (21) of the basic body (8) is aligned with a region of the abutment surface (12) of the abutment projection (11).

6. Belt buckle (1) according to any one of the preceding claims, wherein the attachment device (7) is formed in one piece.

7. Belt buckle (1) according to any one of the preceding claims, wherein a recess (22) is formed in the basic body (8) for avoiding assembly errors.

## Revendications

1. Boucle de ceinture (1) destinée à un système de ceinture de sécurité comportant un mécanisme de verrou (2) soumis à l'action d'un ressort pour le verrouillage d'une languette de ceinture (4) insérée dans un boîtier de boucle (3) et comportant un bouton-poussoir (5) guidé sur le boîtier de boucle (3) de manière coulissante sous l'action d'un ressort pour l'action sur le mécanisme de verrou (2) nécessaire pour le déverrouillage de la boucle de ceinture (1), un câble (6) fixant la boucle de ceinture (1) à un véhicule étant fixé au moyen d'un dispositif de fixation (7) riveté sur le boîtier de boucle (3) et le dispositif de fixation (7) comprenant un corps de base (8) en forme de plaque, de la surface de base (9) duquel une saillie d'appui (11) dotée d'une surface d'appui (12) radiale arquée pour une dragonne (13) formée par le câble (6) dépasse dans une direction axiale (10) et une tige de rivetage (14) dépassant de la saillie d'appui (11) dans la direction axiale (10), **caractérisée en ce que** la tige de rivetage (14) est décalée de manière excentrique par rapport à un sommet (15) de la surface d'appui (12) arquée de la saillie d'appui (11) enlacée par le câble (6), la distance (16) du sommet (15) de la surface d'appui (12) au centre (17) de la tige de rivetage (14) étant inférieure au rayon de courbure (18) de la surface d'appui (12) au niveau du sommet (15).

2. Boucle de ceinture (1) selon la revendication 1, dans laquelle la surface d'appui (12) décrit un arc de cercle.

3. Boucle de ceinture (1) selon la revendication 1, dans laquelle la surface d'appui (12) décrit un arc d'une ellipse.

4. Boucle de ceinture (1) selon l'une des revendications précédentes, dans laquelle au moins un support de câble (19) est formé sur le dispositif de fixation (7), ledit support de câble étant disposé opposé à la surface d'appui (12) à une distance de celle-ci correspondant au moins au diamètre de câble (20).

5. Boucle de ceinture (1) selon l'une des revendications précédentes, dans laquelle le corps de base (8) possède une forme de base rectangulaire et un grand côté (21) du corps de base (8) est aligné avec une zone de la surface d'appui (12) de la saillie d'appui (11).

6. Boucle de ceinture (1) selon l'une des revendications précédentes, dans laquelle le dispositif de fixation (7) est réalisé en une seule pièce.

7. Boucle de ceinture (1) selon l'une des revendications précédentes, dans laquelle un évidement (22) est formé dans le corps de base (8) pour éviter les erreurs de montage.
